# EUROPEAN PATENT APPLICATION

(11) **EP 2 572 988 A1**
(43) Date of publication of application: **27.03.2013**
(21) Application number: 12162737.6
(22) Date of filing: 30.03.2012
(51) Int. Cl.: B64D 37/06, B64D 37/32, B60K 15/03

(54) **Self-healing reservoir coating system**

(30) Priority: 21.09.2011 US 201113238790
(71) Applicant: Bell Helicopter Textron Inc., Fort Worth, TX 76101 (US)
(72) Inventor: Liardon, Darrell, Burleson, TX 76028 (US)
(74) Representative: Lawrence, John

(57) **Abstract**

The system (111) includes a coating (311) for a reservoir (301), the coating (311) being configured to self-heal following a penetration by a projectile through the coating (311) and the reservoir (301). The coating (311) is an elastomeric polymer coating having sufficient elasticity to so as return to the coating (311) to an approximate original shape after the projectile has passed through the coating (311). Further, the coating (311) is configured to hold the reservoir (301) together following severe damage from the projectile.

## Description

### BACKGROUND

### 1. Government License Rights

This invention was made with government support under the MRGB Dry Run Improvement Phase I, Contract No. N00019-06-G-0001, Delivery Order 0023, awarded by NAVAIR. The government has certain rights in the invention.

### 2. Field of the Invention

The present application relates to the protection of fluid-filled reservoirs from battle damage.

### 3. Description of Related Art

Aircraft typically have one or more reservoirs that contain a volume of fluid, such as a gearbox fluid, which may be flight critical. Because certain aircraft are susceptible to battle damage, such as projectile holes, the system can lose functionality if the flight critical fluid is drained from the reservoir as the result of the battle damage. For example, if a gearbox loses its source of gearbox fluid, then it can quickly lose lubrication and overheat.

Although there have been significant developments in aircraft systems, significant room for improvement remains.

### DESCRIPTION OF THE DRAWINGS

The novel features believed characteristic of the system of the present application are set forth in the appended claims. However, the system itself, as well as a preferred mode of use, and further objectives and advantages thereof, will best be understood by reference to the following detailed description when read in conjunction with the accompanying drawings, wherein:
Figure 1 is a perspective view of a rotorcraft, according to the present application;
Figure 2 is a perspective view of a tiltrotor aircraft, according to the preferred embodiment of the present application;
Figure 3 is a cross-sectional view of the system, according to the preferred embodiment of the present application; and
Figures 4A-4D are progressive schematic cross-sectional views of the system, according to the preferred embodiment of the present application.

While the system of the present application is susceptible to various modifications and alternative forms, specific embodiments thereof have been shown by way of example in the drawings and are herein described in detail. It should be understood, however, that the description herein of specific embodiments is not intended to limit the method to the particular forms disclosed, but on the contrary, the intention is to cover all modifications, equivalents, and alternatives falling within the spirit and scope of the application as defined by the appended claims.

### DETAILED DESCRIPTION OF THE PREFERRED EMBODIMENT

Illustrative embodiments of the system of the present application are described below. In the interest of clarity, not all features of an actual implementation are described in this specification. It will of course be appreciated that in the development of any such actual embodiment, numerous implementation-specific decisions must be made to achieve the developer's specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

In the specification, reference may be made to the spatial relationships between various components and to the spatial orientation of various aspects of components as the devices are depicted in the attached drawings. However, as will be recognized by those skilled in the art after a complete reading of the present application, the devices, members, apparatuses, *etc.* described herein may be positioned in any desired orientation. Thus, the use of terms such as "above," "below," "upper," "lower," or other like terms to describe a spatial relationship between various components or to describe the spatial orientation of aspects of such components should be understood to describe a relative relationship between the components or a spatial orientation of aspects of such components, respectively, as the device described herein may be oriented in any desired direction.

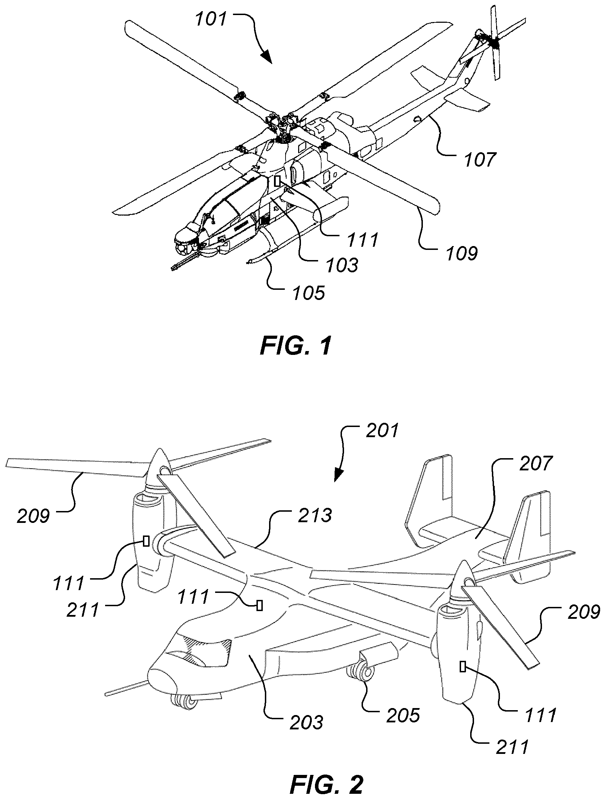

Referring to Figure 1, a rotorcraft 101 is illustrated. Rotorcraft 101 includes a fuselage 103, a landing gear 105, a tailboom 107, and a plurality of rotor blades 109. Rotorcraft 101 includes a system 111 having a reservoir with a self-healing layer, as discussed further herein. In one embodiment, the reservoir contains a lubrication fluid for a gearbox.

Referring now to Figure 2, a tiltrotor aircraft 201 is illustrated. Tiltrotor 201 includes a fuselage 203, a landing gear 205, and a tail member 207. A wing 213 has a nacelle 211 located on each end, each nacelle 211 houses a rotor system configured to rotate a plurality of rotor blades 209. Tiltrotor 201 is capable of flying in a helicopter mode, in which each nacelle 211 is positioned approximately vertical, and flying in an airplane mode, in which each nacelle 211 is positioned approximately horizontal. Tiltrotor 201 also includes one or more systems 111, each system 111 having a reservoir with a self-healing layer, as discussed further herein.

Rotorcraft 101 and tiltrotor 201 are illustrated as exemplary aircraft that may employ system 111 of the present application. It should be appreciated any variety of aircraft types may use the system of the present application to protect reservoirs against battle damage. Exemplary aircraft types may include an airplane, gyrocopter, and unmanned aircraft, to name a few. Further, other vehicles, such as land-based vehicle, water-based vehicles, and other objects may also employ the system of the present application to protect a reservoir against battle damage.

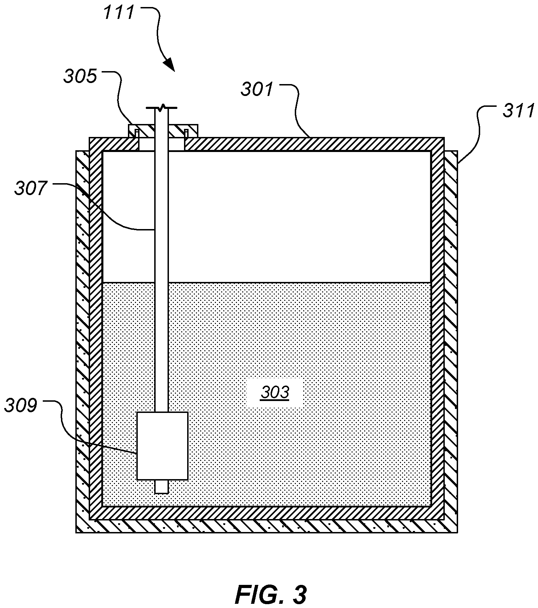

Referring to Figure 3, system 111 is illustrated in further detail. System 111 includes a reservoir 301 configured to contain a fluid 303. Reservoir 301 is preferable a metal casting, such as a magnesium casting. However, it should be appreciated that reservoir 301 can be manufactured in a variety of materials. In the preferred embodiment, reservoir 301 is a gearbox reservoir configured to contain gearbox lubrication fluid. However, reservoir 301 may take on a wide variety of shapes and sizes, which are implementation specific. The precise fluid 303 is also implementation specific; however, exemplary fluids include hydraulic fluid, lubrication fluid, and fuel, to name a few. System 111 can include operational features, such as a cap 305, a fluid line 307, and a fluid pump 309, to name a few.

Still referring to Figure 3, system 111 includes a coating 311 that is configured to self-heal upon the penetration of a projectile through coating 311 and reservoir 301. Further, coating 311 is configured to contain and hold reservoir 301 together subsequent to the projectile damage.

In the preferred embodiment, coating 311 is an elastomeric polymer material that bonds to the exterior surface of reservoir 301. One exemplary elastomeric polymer materials suitable as coating 311 is WATERSHIELD III^{™}, which is an elastomeric polyurea material marketed by Specialty Products Incorporated. However, other elastomeric polymer materials may be used for coating 311. As discussed further herein, it is preferred that coating 311 exhibit a high tensile strength and elongation properties. In one embodiment, coating 311 has a tensile strength greater than 2,600 psi and an elongation property greater than 930%. It should be appreciated that coatings having other properties may also be used. Coating 311 may completely cover or partially cover reservoir 301.

Coating 311 is preferably waterproof so as to not absorb fluid 303. It is also preferred that coating 311 is sprayable onto the surface of reservoir 301; however, alternative embodiments of coating 311 may be applied in methods other than spraying. After coating 311 is sprayed onto the surface of reservoir 301, coating 311 is allowed polymerize or cure. After polymerization, coating 311 exhibits internal residual tensile strength, the tensile strength being the amount of stress necessary to break apart the material. An elastic elongation of coating 311 is the percent elongation allowed without causing permanent deformation. Coating 311 is configured such that the polymers in the material have sufficiently high tensile strength and high elastic elongation characteristics so as to allow the coating 311 to snap back and at least partially fill a void created by a projectile penetration.

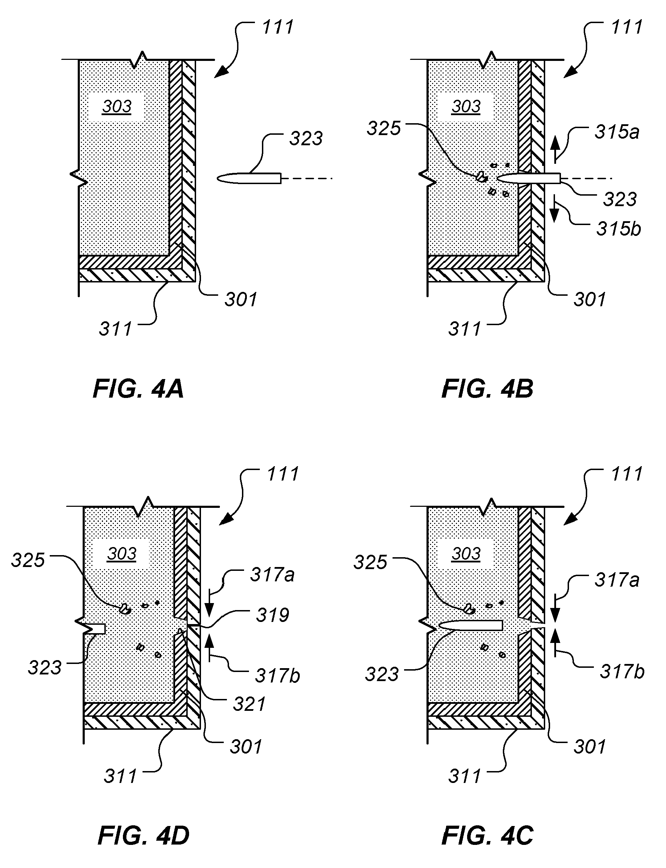

Referring to Figures 4A-4B, coating 311 is dynamically illustrated during a penetration of a projectile 323. Referring to Figure 4A, system 111 is illustrated prior to impact by projectile 323. Referring now also to Figure 4B, system 111 is illustrated during impact by projectile 323. During impact, coating 311 exhibits tensile strength and elastic elongation to separate and compress radially in radial directions 315a and 315b. Impact of projectile 323 with reservoir 301 causes reservoir to fracture into fracture pieces 325. Referring now also to Figure 4C, system 111 is illustrated immediately have projectile has passed through coating 311 and side wall of reservoir 311. As shown in Figure 4C, coating 311 expands near the penetration area in radial directions 317a and 317b. Referring now also to Figure 4D, system 111 is illustrated at a time after which coating 311 has fully expanded near the penetration area to leave a pin-sized hole 319. Hole 319 is preferably small enough so that the surface tension of fluid 303 prevents fluid 303 from escaping through hole 319. In some embodiments, hole 319 may leak a small amount of fluid 303; however, preferably the rate of leakage is low enough to provide ample time for the aircraft to continue to operate. For example, the low flow rate is preferably low enough so that the supply of fluid 303 is able to sustain the device on the vehicle that uses fluid 303 to operate. In the embodiment where reservoir 301 is a gearbox fluid reservoir, coating 311 is configured such that any flow through pin-sized hole 319 is low enough so that the gearbox does not experience a sudden and possible catastrophic loss-of-lubrication event before the aircraft can return to base and land safely.

A thickness of coating 311 can be partially determined by the predicted size of projectile 323. For example, a coating 311 of a thin thickness may sufficiently close-up and self-seal following penetration of a small sized projectile, but not a large sized projectile. Furthermore, a larger thickness of coating 311 may be required to sufficiently close-up and self-seal following penetration of a large sized projectile. As such, is it preferred that the thickness of coating 311 is determined in part by predicted size of projectile 323.

Still referring to Figures 4A-4B, coating 311 is also configured to contain a damaged reservoir 301 in a post-impact environment. Because reservoir 301 is preferably of a metallic material, reservoir 301 may crack due to the brittle nature of the material. Further, cracks may propagate away from reservoir hole 321. In order to prevent reservoir 301 from coming apart into pieces, coating 311 is configured to hold reservoir 301 together so as to preserve the reservoir shape and functionality. Coating 311 further acts as a secondary fluid container to contain any fluid 303 that may have leaked from reservoir 301, thereby limiting flow of fluid 303 from reservoir 301.

The system of the present application provides significant advantages, including: (1) providing a system configured to eliminate leakage of a fluid from a reservoir due to a projectile penetration; (2) providing a system configured to reduce leakage of a fluid from a reservoir due to a projectile penetration; (3) providing a system configured to contain a cracked reservoir due to a projectile penetration; and (4) providing a system configured to act as a secondary reservoir when leakage through the reservoir occurs. The particular embodiments disclosed above are illustrative only, as the system of the present application may be modified and practiced in different but equivalent manners apparent to those skilled in the art having the benefit of the teachings herein. Furthermore, no limitations are intended to the details of construction or design herein shown, other than as described in the claims below. It is therefore evident that the particular embodiments disclosed above may be altered or modified and all such variations are considered within the scope and spirit of the application. Accordingly, the protection sought herein is as set forth in the claims below. It is apparent that a system with significant advantages has been described and illustrated. Although the system of the present application is shown in a limited number of forms, it is not limited to just these forms, but is amenable to various changes and modifications without departing from the spirit thereof.

## Claims

1. A system for a reservoir, the system comprising:
a coating located exterior to the reservoir, the reservoir being configured to contain a fluid;
wherein the coating is configured to self-heal following a penetration by a projectile.

2. An aircraft comprising:
a fuselage;
a plurality of rotor blades;
a gearbox;
a reservoir configured to contain a lubrication fluid for the gearbox;
a coating located exterior to the reservoir, the coating being configured to self-heal following a penetration by a projectile through the coating and the reservoir.

3. The system according to claim 1 or the aircraft according to claim 2,, wherein the coating is a single member, and/or an elastomeric polymer material.

4. The system or aircraft according to claim 1, claim 2 or claim 3, wherein the coating is configured to separate or part and radially contract outwardly during an impact by the projectile, or when the projectile enters the coating, and/or wherein the coating is configured to expand radially inward after the projectile has passed through the coating.

5. The system or aircraft according to claim 4, wherein the coating is configured to contract radially inward after a projectile has passed through the coating, thereby producing a pin-sized hole where in the projectile passed through the coating.

6. The system or aircraft according to claim 5, wherein the pin-sized hole is sized such that a surface tension of the fluid prevents leakage from inside the reservoir through the pin-sized hole or such that a flow of the fluid through the pin-sized hole is limited to a sustainable rate.

7. The system or aircraft according to claim 1 or any preceding claim, wherein the reservoir is a gearbox reservoir and the fluid is gearbox lubrication fluid.

8. The aircraft according to claim 2, or any one of claims 3 to 7, wherein the coating is a single member of an elastomeric polymer material.

9. The aircraft according to claim 2, or any one of claims 3 to 8, wherein the coating is bonded to the reservoir.

10. The aircraft according to claim 2, or any one of claims 3 to 9, wherein the coating is configured to elastically return to an approximate original shape.

11. The aircraft according to claim 6, wherein the pin-sized hole is sized such that a flow of the fluid through the pin-sized hole is limited to a sustainable rate, so that the gearbox remains operable for a period of time necessary for the aircraft to land.

12. The aircraft according to claim 2, or any of claims 3 to 11, wherein the coating is configured to hold the reservoir together upon severe damage from the projectile.

13. The aircraft according to claim 2, or of any of claims 3 to 12, wherein the thickness of the coating is sized to withstand a certain sized projectile.

## Amended claims

### Amended claims in accordance with Rule 137(2) EPC.

**1.** A system (111) for a reservoir (301), the system (111) comprising:
a coating (311) sprayed onto an exterior of the reservoir (301), the reservoir (301) being configured to contain a fluid (303);
wherein the coating (311) is configured to self-heal following a penetration by a projectile (323).

**2.** An aircraft (101, 201) comprising:
a fuselage (103, 203);
a plurality of rotor blades (109, 209);
a gearbox; and
a system (111) according to claim 1, the reservoir (301) configured to contain a lubrication fluid (303) for the gearbox.

**3.** The system (111) according to claim 1 or the aircraft (101, 201) according to claim 2, wherein the coating (311) is a single member, and/or an elastomeric polymer material.

**4.** The system (111) or aircraft (101, 201) according to claim 1, claim 2 or claim 3, wherein the coating (311) is configured to separate or part and radially contract outwardly during an impact by the projectile (323), or when the projectile (323) enters the coating (311), and/or wherein the coating (311) is configured to expand radially inward after the projectile (323) has passed through the coating (311).

**5.** The system (111) or aircraft (101, 201) according to claim 4, wherein the coating (311) is configured to contract radially inward after a projectile (323) has passed through the coating (311), thereby producing a pin-sized hole (319) where in the projectile (323) passed through the coating (311).

**6.** The system (111) or aircraft (101, 201) according to claim 5, wherein the pin-sized hole (319) is sized such that a surface tension of the fluid (303) prevents leakage from inside the reservoir (301) through the pin-sized hole (319) or such that a flow of the fluid through the pin-sized hole (319) is limited to a sustainable rate.

**7.** The system (111) or aircraft (101, 201) according to claim 1 or any preceding claim, wherein the reservoir (301) is a gearbox reservoir and the fluid (303) is gearbox lubrication fluid.

**8.** The aircraft (101, 201) according to claim 2, or any one of claims 3 to 7, wherein the coating (311) is a single member of an elastomeric polymer material.

**9.** The aircraft (101, 201) according to claim 2, or any one of claims 3 to 8, wherein the coating (311) is bonded to the reservoir (301).

**10.** The aircraft (101, 201) according to claim 2, or any one of claims 3 to 9, wherein the coating (311) is configured to elastically return to an approximate original shape.

**11.** The aircraft (101, 201) according to claim 6, wherein the pin-sized hole (319) is sized such that a flow of the fluid (303) through the pin-sized hole (319) is limited to a sustainable rate, so that the gearbox remains operable for a period of time necessary for the aircraft (101, 201) to land.

**12.** The aircraft (101, 201) according to claim 2, or any of claims 3 to 11, wherein the coating (311) is configured to hold the reservoir (301) together upon severe damage from the projectile (323).

**13.** The aircraft (101, 201) according to claim 2, or of any of claims 3 to 12, wherein the thickness of the coating (301) is sized to withstand a certain sized projectile (323).
